# EUROPÄISCHE PATENTSCHRIFT

(11) **EP 3 012 567 B1**
(45) Veröffentlichungstag und Bekanntmachung des Hinweises auf die Patenterteilung: **13.12.2017**
(21) Anmeldenummer: 15190748.2
(22) Anmeldetag: 21.10.2015
(51) Int. Cl.: F23L 7/00, F23C 1/00, F27B 7/10, F27B 7/34, F27B 7/36, F27D 99/00

(54) **VERFAHREN UND VORRICHTUNG ZUR BEHEIZUNG EINES OFENRAUMS UNTER VERWENDUNG EINES MERHSTOFFBRENNERS**
METHOD AND DEVICE FOR HEATING AN OVEN USING A MULTIPLE FUEL BURNER
PROCEDE ET DISPOSITIF DE CHAUFFAGE D'UN FOUR A L'AIDE D'UN BRULEUR MIXTE

(30) Priorität: 23.10.2014 DE 102014015660
(43) Veröffentlichungstag der Anmeldung: 27.04.2016
(73) Patentinhaber: Messer Austria GmbH, 2352 Gumpoldskirchen (AT)
(72) Erfinder: Demuth, Martin, 2352 Gumpoldskirchen (AT); Potesser, Michael, 1020 Wien (AT)
(74) Vertreter: Münzel, Joachim R.

(56) Entgegenhaltungen:
- EP-A1- 0 643 262
- WO-A2-2004/104231
- DE-A1-102011 015 317

## Beschreibung

Die Erfindung betrifft ein Verfahren zum Beheizen eines Ofenraums, bei dem mittels eines Mehrstoffbrenners ein primärer Brennstoff und ein primäres Oxidationsmittel sowie wenigstens ein Sekundärbrennstoff und ein sekundäres Oxidationsmittel in einen Ofenraum eingetragen werden. Die Erfindung betrifft weiterhin einen Mehrstoffbrenner zur Durchführung des erfindungsgemäßen Verfahrens.

Mehrstoffbrenner kommen insbesondere in Drehrohröfen, beispielsweise in Drehrohröfen zur Zementherstellung oder zur thermischen Abfallverwertung, zum Einsatz und ermöglichen insbesondere die Verwendung von Brennstoffen unterschiedlichen Heizwerts bei der Verbrennung. Sie umfassen in der Regel mehrere Zuführungen für ein primäres Oxidationsmittel, einen ersten (oder "primären") Brennstoff sowie mindestens ein Förderrohr für mindestens einen weiteren Brennstoff ("Sekundärbrennstoff"). Zusätzlich wird ein weiteres Oxidationsmittel ("Sekundärluft") über separate und/oder in den Brenner integrierte Zuführungen in den Ofenraum eingetragen. Die Zuführungen bzw. Förderrohre sind dabei als Ringkanäle ausgebildet und/oder verlaufen als parallel zueinander angeordnete Rohre durch den Brennerkörper hindurch. Ein derartiger Mehrstoffbrenner wird beispielsweise in der DE 10 2010 061 496 A1 beschrieben.

Als primäres Oxidationsmittel kommt in der Regel Luft ("Primärluft") zum Einsatz. Als primärer Brennstoff wird meist ein hochkalorischer Brennstoff (mit einem Heizwert von mehr als 10 kWh/m³ bzw. 30 MJ/kg) oder ein Gemisch aus einem hochkalorischen Brennstoff wie Kohle, Öl oder Erdgas mit einem Ersatzbrennstoff verwendet. Beim Sekundärbrennstoff handelt es sich nicht selten um niederkalorische Brennstoffe bzw. Ersatzbrennstoffe.

Unter dem Begriff "niederkalorische Brennstoffe" werden Brennstoffe verstanden, die einen geringeren Heizwert als Erdgas besitzen. Beispiele für niederkalorische Brennstoffe sind gasförmige Brennstoffe mit einem Heizwert von weniger als 10 kWh/m³, wie beispielsweise Biogas, Stadtgas oder Grubengas, oder feste oder flüssige Brennstoffe mit einem Heizwert unter 30 MJ/kg. Unter dem Begriff "Ersatzbrennstoffe" sollen hier sämtliche nicht-fossilen Brennstoffe, insbesondere aus Abfall gewonnene Brennstoffe, verstanden werden. Die Spanne der eingesetzten Ersatzbrennstoffe reicht von Lösemitteln, Reifen- und Altholzschnitzel, Klärschlamm, Spuckstoffen, Schreddermaterial aus der Kunststoffverarbeitung oder Tiermehl bis hin zur aufbereitetem Abfall aus Haushalten, Industrie- und Gewerbebetrieben, sowie nachwachsende Rohstoffe.

Aus betriebswirtschaftlichen Erwägungen geht der Trend in der Zementindustrie zu einem immer stärkeren Einsatz von derartigen niederkalorischen Brennstoffen bzw. Ersatzbrennstoffen. Ein erhöhter Anteil von Ersatzbrennstoffen im Primärbrennstoff, insbesondere bei Einsatz von Festbrennstoffen, führt jedoch zu Problemen mit dem Ofenbetrieb und der Klinkerqualität. Da Ersatzbrennstoffe, wie beispielsweise geschredderte Kunststoffe, aus technischen und betriebswirtschaftlichen Gründen nur bis Korngrößen von ca. 10 bis 20 mm Durchmesser aufbereitet werden, besitzen sie ein deutlich schlechteres Flug- und Ausbrandverhalten als beispielsweise eine fein gemahlene Kohle. Gleichzeitig beinhalten diese Materialien unterschiedlichste Inhaltsstoffe und Feuchtegehalte, und die Korngrößenverteilung erstreckt sich über ein weites Kornband. Dies führt dazu, dass insbesondere große, schwere und unregelmäßig geformte Partikel vor ihrer vollständigen Umsetzung auf das Klinkerbett fallen und dort chemische Reaktionen mit dem Aufgabestoff auslösen. Insbesondere kommt es im Klinkerbett zu einer Reduktion von Fe₂O₃ zu FeO, die wiederum in der Verfärbung des Klinkers und in einer verminderten Klinkerqualität resultiert. Das schlechte Ausbrandverhalten verschiebt auch die Temperaturverteilung der Flamme vom Brennermund weg und verringert die damit erreichbaren Spitzentemperaturen, welche zum Brennen des Materials notwendig sind.

Um die Verbrennung des Sekundärbrennstoffs zu verbessern und gleichzeitig den Ausstoß schädlich Abgase, wie beispielsweise Stickoxide, zu verringern wurde bereits der Eintrag von zusätzlichem Sauerstoff in den Ofenraum vorgeschlagen. So wird beim Gegenstand der DE 10 2008 029 512 B4 gasförmiger Sauerstoff mittels einer Lanze in Richtung auf einen den Ofenraum durchquerenden Sekundärbrennstoffstrom ausgetragen.

Aus der DE 10 2013 004 016 A1 ist bekannt, mittels einer innerhalb einer Sekundärbrennstoffzuführung angeordneten Lanze den aus der Sekundärbrennstoffdüse ausgetragenen Sekundärbrennstoff mit einem Strahl gasförmigen Sauerstoffs zu zerstäuben und innig mit diesem zu durchmischen.

Es wurde auch bereits vorgeschlagen, flüssigen Sauerstoff (LOX) als Oxidationsmittel in Verbrennungsvorgängen einzusetzen. So ist die Verwendung von flüssigem Sauerstoff in einem Drehrohrofen bereits aus der EP 0 866 295 A1 bekannt, wird dort jedoch nicht in Zusammenhang mit der Verbesserung der Verbrennung von Sekundärbrennstoff erwähnt.

Aus der DE 2011 015 317 A1 ist ein Verfahren zum Betreiben eines Drehrohrofens bekannt, bei dem flüssiger Sauerstoff als sekundäres Oxidationsmittel zum Einsatz kommt. Das sekundäre Oxidationsmittel wird gleichzeitig mit dem Eintrag eines sekundären Brennstoffs geringen Heizwerts mittels einer Sauerstofflanze in den Brennraum eingetragen, um mit diesem einen Sekundärbrennbereich auszubilden. Nachteilig bei dieser Vorgehensweise ist jedoch, dass ein nicht unwesentlicher Teil des Sauerstoffs bereits vor Erreichen des Ofenraums in der Zuleitung zur Sauerstofflanze, in der Sauerstofflanze selbst oder unmittelbar nach dem Austritt aus der Sauerstofflanze verdampft. Die enorme Volumenausdehnung bei der Verdampfung führt dazu, dass der Flüssigsauerstoff zerstäubt wird und dadurch nur eine geringe Eindringtiefe in den Ofenraum besitzt.

Aufgabe der Erfindung ist es daher, eine Möglichkeit zum Beheizen eines Ofenraumes unter Einsatz eines Sekundärbrennstoffs anzugeben, die eine tief in den Ofenraum reichende Reaktion des sekundären Brennstoffs mit sekundärem Oxidationsmittel ermöglicht.

Gelöst ist diese Aufgabe durch ein Verfahren mit den Merkmalen des Patentanspruchs 1. Vorteilhafte Ausgestaltungen der Erfindung, die einzeln oder in Kombination miteinander Verwendung finden können, sind in den Unteransprüchen angegeben.

Beim erfindungsgemäßen Verfahren werden also primärer Brennstoff und primäres Oxidationsmittel über beispielsweise koaxial zueinander angeordnete Ringkanäle oder ringförmig angeordnete Einzeldüsen eines Mehrstoffbrenners in den Ofenraum eingetragen, in dem sie nach Zündung eine Flamme ausbilden. Über eine weitere Zuführung des Mehrstoffbrenners wird ein sekundärer Brennstoff, beispielsweise ein niederkalorischer Brennstoff, eingetragen. Eine weitere, innerhalb oder außerhalb des Mehrstoffbrenners angeordnete Zuleitung, beispielsweise eine Sauerstofflanze, dient zur Zuführung eines sekundären Oxidationsmittels, als das erfindungsgemäß flüssiger Sauerstoff zum Einsatz kommt, der vor seinem Eintrag mit einem Medium, dessen Temperatur niedriger als die Temperatur des flüssigen Sauerstoffs ist, in thermischen Kontakt gebracht, dadurch unterkühlt und als Flüssigkeitsstrahl in den Ofenraum eingetragen wird.

Die Erfindung geht von der Überlegung aus, dass die Verbrennung des sekundären Brennstoffs dadurch begünstigt werden kann, dass das sekundäre Oxidationsmittel möglichst tief in den Ofenraum eingetragen wird und auf diese Weise möglichst lange mit dem Strahl des Sekundärbrennstoffs reagieren kann. Flüssiger Sauerstoff besitzt eine höhere Dichte und damit eine geringere Oberfläche pro Volumen als gasförmiger Sauerstoff. Aus diesem Grunde besitzt flüssiger Sauerstoff auch eine höhere Eindringtiefe in ein Medium als gasförmiger Sauerstoff und wird in der turbulenten Atmosphäre eines Ofenraums weniger stark abgelenkt als dieser. Um zu gewährleisten, dass der Sauerstoff im flüssigen Zustand in den Ofenraum eindringt, erfolgt eine Unterkühlung des flüssigen Sauerstoffs auf eine Temperatur, die so gewählt ist, dass der Sauerstoff während seines Transports durch die Sauerstofflanze und zumindest teilweise während seines Fluges durch den Ofenraum im flüssigen Zustand verbleibt. Beispielsweise besitzt der Sauerstoff beim Eintritt in den Ofenraum eine Temperatur von 5°C bis 20°C unterhalb seines Siedepunkts. Der Sauerstoff tritt mit dieser Temperatur als vollständig flüssiger Strahl in den Ofenraum ein; eine Ausbildung von Gasblasen aus verdampfendem Sauerstoff in der Sauerstofflanze oder beim Austritt in den Ofenraum, die die Dynamik des Flüssigkeitsstrahls im Ofenraum beeinträchtigen könnte, wird zuverlässig vermieden.

Durch den Kontakt mit der heißen Atmosphäre im Ofenraum heizt sich der Flüssigsauerstoffstrahl, beginnend von der Strahloberfläche, allmählich auf. Erst bei Erreichen des Siedepunkts verdampft zunächst die äußere Schicht des Flüssigsauerstoffstrahls und führt zur Ausbildung einer isolierenden Gasschicht, die die weitere Aufheizung und Verdampfung der inneren Abschnitte des Flüssigsauerstoffstrahls verlangsamt. Der Sauerstoff verbleibt auf diese Weise über einen langen Zeitraum zumindest teilweise im flüssigen Zustand und kann so tief in den Ofenraum eingetragen und dabei beispielsweise gezielt in Richtung des sekundären Brennstoffstrahls ausgerichtet werden. Die Erfindung erleichtert insbesondere die Verbrennung von niederkalorischen Brennstoffen oder Ersatzbren nstoffen.

Für die Unterkühlung des flüssigen Sauerstoffs bestehen verschiedene Möglichkeiten. Eine zweckmäßige Ausgestaltung der Erfindung sieht beispielsweise vor, dass der flüssige Sauerstoff vor seiner Zuführung an den Mehrstoffbrenner oder innerhalb des Mehrstoffbrenners mit einem Kühlmedium aus flüssigem Stickstoff oder einem anderen tiefkalt verflüssigtem Gas, beispielsweise verflüssigtem Argon, in thermischen Kontakt gebracht wird. Das Kühlmedium kann dabei seinerseits im unterkühlten Zustand vorliegen, um die Temperatur, auf die der flüssige Sauerstoff gekühlt wird, weiter zu reduzieren. Beispielsweise kann dazu das als Kühlmedium eingesetzte verflüssigte Gas mittels einer Vakuumpumpe auf eine tiefere Temperatur gebracht werden, als es dem Siedepunkt bei Umgebungsdruck entspricht; flüssiger Stickstoff kann auf diese Weise auf eine Temperatur von -205°C und darunter abgekühlt werden.

Eine andere vorteilhafte Möglichkeit zur Unterkühlung des flüssigen Sauerstoffs besteht darin, dass der flüssige Sauerstoff mit flüssigem oder gasförmigem Sauerstoff in thermischen Kontakt gebracht wird, dessen Druck während des thermischen Kontakts niedriger als der flüssige Sauerstoff gehalten wird. Auch in diesem Fall ist die Temperatur des als Kühlmedium eingesetzten, auf niedrigerem Druck gehaltenen Sauerstoffs tiefer als die Siedetemperatur des in den Ofenraum eingeleiteten Flüssigsauerstoffs. Der Vorteil dieser Ausgestaltung besteht insbesondere darin, dass der als Kühlmedium eingesetzte Sauerstoff und der als sekundäres Oxidationsmittel eingesetzte Sauerstoff aus der gleichen Quelle entnommen werden kann. Allerdings ist dann strömungstechnisch dafür Sorge zu tragen, dass beide Medien auf unterschiedlichen Drücken gehalten werden können.

Beispielsweise wird flüssiger Sauerstoff in einem Behälter auf einem niedrigen Druck als der als sekundäres Oxidationsmittel eingesetzte Sauerstoff gehalten. Im Behälter ist ein Wärmetauscher, beispielsweise eine Kühlschlange, angeordnet, an dem der als sekundäres Oxidationsmittel vorgesehene flüssige Sauerstoff mit dem im Behälter befindlichen flüssigen Sauerstoff in thermischen Kontakt gebracht und dadurch unterkühlt wird. Der Druckunterschied der beiden Medien wird dabei insbesondere dadurch hergestellt, dass der Behälter mittels einer Vakuumpumpe auf einen niedrigeren Druck gebracht wird und/oder der als sekundäres Oxidationsmittel vorgesehene flüssige Sauerstoff vor seiner Zuführung zum Wärmetauscher auf einen höheren Druck als der flüssige Sauerstoff im Behälter gebracht wird.

Eine besonders vorteilhafte Ausgestaltung der Erfindung sieht vor, dass der flüssige Sauerstoff als ein mit einem Hüllstrom aus gasförmigem Sauerstoff umgebener Flüssigkeitsstrahl in den Ofenraum eingetragen wird. Der wärmeisolierend wirkende Hüllstrom wird beispielsweise aus einer Ringdüse achsparallel zum Flüssigsauerstoff in den Ofenraum eingetragen, der eine als Zuführung des unterkühlten flüssigen Sauerstoffstrahls eingesetzte Sauerstofflanze umgibt. Ringdüse und Sauerstofflanze können dabei in das Gehäuse des Mehrstoffbrenners integriert sein, sie können jedoch auch als vom Brennergehäuse getrennte Eintragseinheit vorgesehen sein. Im Falle der oben beschriebenen Unterkühlung des flüssigen Sauerstoffs durch flüssigen Sauerstoff, der bei einem niedrigeren Druck vorliegt, ist es zweckmäßig, den als Kühlmedium eingesetzten Sauerstoff anschließend zur Speisung der Ringdüse zu verwenden.

Zur Durchführung des erfindungsgemäßen Verfahrens eignet sich insbesondere eine Vorrichtung mit den Merkmalen des Anspruchs 5. Eine solche Vorrichtung umfasst einen Mehrstoffbrenner mit einer Zuführung für einen primären Brennstoff und einer Zuführung für ein primäres Oxidationsmittel sowie wenigstens einem Förderrohr für einen Sekundärbrennstoff, die gemeinsam an einem Brennermund des Mehrstoffbrenners in einen Ofenraum ausmünden. Weiterhin ist eine Sauerstofflanze vorgesehen, die an einer Zuleitung für flüssigen Sauerstoff angeschlossen ist. In der Zuleitung für flüssigen Sauerstoff und/oder in der die Sauerstofflanze selbst ist ein Wärmetauscher angeordnet, der mit einer Quelle für ein eine niedrigere Temperatur als der flüssige Sauerstoff aufweisendes Kühlmedium strömungsverbunden ist.

Im Wärmetauscher erfolgt die Unterkühlung des als sekundäres Oxidationsmittel vorgesehenen flüssigen Sauerstoffs durch Wärmetausch mit dem Kühlmedium. Mit der erfindungsgemäßen Vorrichtung gelingt es, das sekundäre Oxidationsmittel als ein flüssiger Sauerstoffstrahl in den Ofenraum einzutragen, der auch über zumindest einen großen Teil seiner Flugbahn im flüssigen Zustand verbleibt und daher tief in den Ofenraum eingetragen werden kann. Die Sauerstofflanze ist entweder als eine vom Mehrstoffbrenner getrennte Einheit zum Eintragen von Flüssigsauerstoff in den Ofenraum vorgesehen oder als eine in den Mehrstoffbrenner integrierte Sauerstofflanze, die an dessen Brennermund in den Ofenraum ausmündet. Bevorzugt ist die Sauerstofflanze derart angeordnet, dass der Flüssigsauerstoffstrahl in Richtung des aus dem Förderrohr austretendenden Sekundärbrennstoffstroms gerichtet ist.

Zum Unterkühlen des flüssigen Sauerstoffs kommt ein Kühlmedium zum Einsatz, dessen Temperatur niedriger ist als die Siedetemperatur des flüssigen Sauerstoffs, wie beispielsweise flüssiger Stickstoff. Es ist jedoch auch möglich, Sauerstoff, der seinerseits unterkühlt ist, als Kühlmedium im Wärmetauscher einzusetzen, wobei der als sekundäres Oxidationsmittel eingesetzte Flüssigsauerstoff und der als Kühlmedium eingesetzte flüssige oder gasförmige Sauerstoff entweder der gleichen Quelle oder aus unterschiedlichen Quellen entnommen werden können. Beispielsweise wird dazu flüssiger Sauerstoff einem Tank entnommen und über ein Entspannungsventil einem Unterkühlungsbereich zugeführt, der mittels einer Vakuumpumpe auf einen niedrigen Druck von beispielsweise 100 mbar bis 200 mbar gebracht wird. Der Unterkühlungsbereich ist thermisch mit einer Wärmetauscherfläche des Wärmetauschers verbunden. Gleichzeitig wird der als sekundäres Oxidationsmittel eingesetzte Flüssigsauerstoff dem gleichen Tank oder einem anderen Tank entnommen und an der Wärmetauscherfläche mit dem Sauerstoff aus dem Unterkühlungsbereich in thermischen Kontakt gebracht und dabei unterkühlt.

In vorteilhafter Weise ist ein zum Unterkühlen des flüssigen Sauerstoffs eingesetzter Wärmetauscher direkt an der Sauerstofflanze angeordnet. Dazu umfasst der Wärmetauscher einen die Sauerstofflanze umgebenden Kühlkanal, der mit einer Quelle für ein eine niedrigere Temperatur als der flüssige Sauerstoff aufweisendes Kühlmedium strömungsverbunden ist. Die Sauerstofflanze und der Ringkanal besitzen dabei einen gemeinsamen Wandabschnitt aus einem thermisch gut leitenden Material, an dem die Wärmeübertagung vom flüssigen Sauerstoff auf das Kühlmedium erfolgt. Die Anordnung des Wärmetauschers innerhalb des Mehrstoffbrenners hat dabei den Vorteil, dass die Kühlung unmittelbar vor dem Austritt des Flüssigsauerstoffs aus dem Mehrstoffbrenner erfolgt.

Bevorzugt ist der das Kühlmedium führende Kühlkanal dabei doppelwandig ausgeführt und in einen inneren Ringkanal und einen äußeren Ringkanal unterteilt, wobei der innere Ringkanal mit dem äußeren Ringkanal im Bereich des Brennermundes miteinander strömungsverbunden ist. Das Kühlmedium wird dabei zunächst durch den inneren Ringkanal geführt und steht dabei im thermischen Kontakt mit dem Flüssigsauerstoff in der Sauerstofflanze. Das durch den Wärmetausch mit dem Flüssigsauerstoff erwärmte Kühlmedium strömt anschließend in den äußeren Ringkanal und wird im Gegenstrom zum Kühlmedium im inneren Ringkanal zurückgeführt. Das Kühlmedium im äußeren Ringkanal bildet so eine vorteilhafte thermische Isolierung des Kühlmediums im inneren Ringkanal gegenüber dem Eindringen von Wärme aus anderen Teilen des Mehrstoffbrenners oder aus dem Ofenraum.

Ebenso ist es vorteilhaft, den Flüssigsauerstoffstrahl mit einem isolierenden Hüllstrom aus gasförmigem Sauerstoff zu umgeben, der dabei nicht notwendigerweise auf einer tiefen Temperatur vorliegen muss. Dazu ist radial außenseitig an der Sauerstofflanze und/oder dem das Kühlmedium führenden Kühlkanal eine als Ringkanal ausgebildete Zuführung für gasförmigen Sauerstoff vorgesehen, die an einer bevorzugt ringförmigen Düse am Brennermund des Mehrstoffbrenners austritt und einen zum Flüssigkeitsstrahl achsparallelen Strom gasförmigen Sauerstoffs erzeugt.

Eine besonders vorteilhafte Ausgestaltung der Erfindung ist dadurch gekennzeichnet, dass die Zuleitung für flüssigen Sauerstoff eine in einem Unterkühlergefäß angeordnete Wärmetauscherfläche umfasst, welches Unterkühlergefäß mit einer Quelle für flüssigen Sauerstoff strömungsverbindbar ist und mit einer Vakuumpumpe zur Herstellung eines Unterdrucks im Unterkühlergefäß ausgerüstet ist. Durch den Unterdruck im Unterkühlergefäß liegt dort flüssiger Sauerstoff bei einer Temperatur unterhalb der Temperatur des durch die Zuleitung geführten flüssigen Sauerstoffs vor, der dadurch an der im Unterkühlergefäß angeordneten Wärmetauscherfläche unterkühlt wird, beispielsweise auf eine Temperatur von minus 190°C und darunter. Auf diese Weise kann insbesondere die gleiche Quelle für flüssigen Sauerstoff sowohl für das sekundäre Oxidationsmittel als auch für das Kühlmittel verwendet werden.

Anhand der Zeichnungen sollen Ausführungsbeispiele der Erfindung näher erläutert werden. In schematischen Ansichten zeigen
Fig. 1: einen Drehrohrofen mit einem erfindungsgemäßen Mehrstoffbrenner im Längsschnitt und
Fig. 2 a und 2b: Ausschnittsweise dargestellte erfindungsgemäße Mehrstoffbrenner mit unterschiedlichen Eintragssystemen für unterkühlten Flüssigsauerstoff im Längsschnitt.

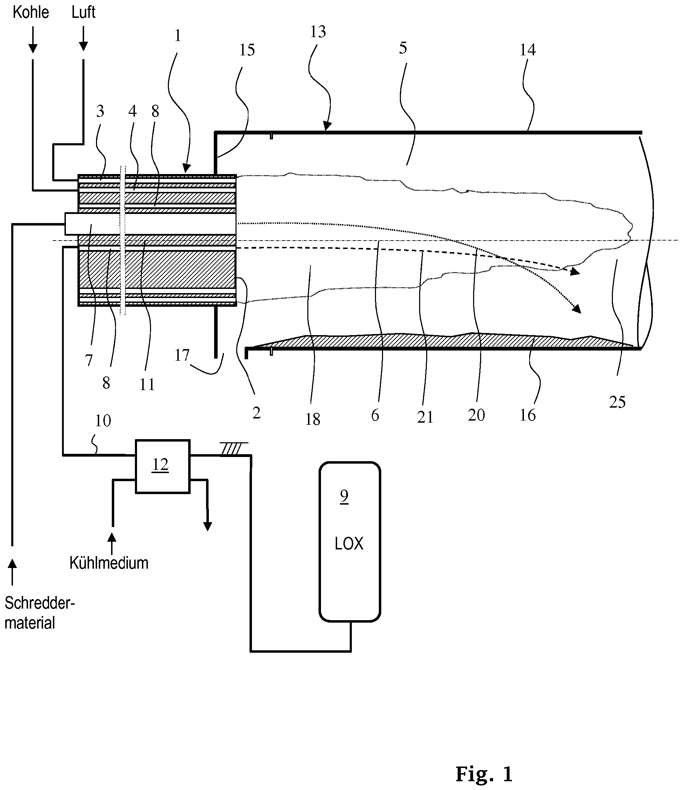

Das Ausführungsbeispiel nach Fig. 1 zeigt einen Mehrstoffbrenner 1, an dessen Brennermund 2 radial außenseitig ein Ringkanal 3 für die Zuführung von primärem Oxidationsmittel und radial innenseitig dazu ein Ringkanal 4 für die Zuführung eines primären Brennstoffs in einen Ofenraum 5 ausmündet. Beim primären Oxidationsmittel handelt es sich in der Regel um Luft oder um ein mit Sauerstoff angereichertes Gas mit einem Sauerstoffanteil von 22 Vol-% und darüber. Beim primären Brennstoff handelt es sich in der Regel um einen hochkalorischen Brennstoff wie Erdgas, Öl oder um einen pulverisierten Festbrennstoff aus Kohle oder Petrolkoks, jedoch kommen auch andere Substanzen als primäre Brennstoffe in Betracht, beispielsweise Mischungen aus einem hochkalorischen und einem niederkalorischen Brennstoff. Des weiteren kann der Mehrstoffbrenner 1 hier nicht gezeigte Zuführungen aufweisen, die unterhalb der horizontalen Mittelebene 6 des Mehrstoffbrenners 1 angeordnet sind und der Zuführung weiterer gasförmiger, flüssiger oder fester sekundärer Brennstoffe dienen, wie beispielsweise Tiermehl, Lösungsmittel, Altöl, etc.

Bevorzugt oberhalb der horizontalen Mittelebene 6 des Mehrstoffbrenners 1 ist ein Förderohr 7 für einen sekundären Brennstoff angeordnet, insbesondere für einen sekundären Festbrennstoff, wie beispielsweise Kunststoff-Schreddermaterial, Reifenschnitzel, Altholz oder sonstige partikelförmige Abfallstoffe oder andere, in der Regel niederkalorische, Festbrennstoffe. Unterhalb des Förderrohrs 7 ist eine Sauerstofflanze 8 für die Zufuhr von flüssigem Sauerstoff in den Ofenraum 5 angeordnet. Im Übrigen sind die Ringkanäle 3, 4, und 8 sowie das Förderrohr 7 innerhalb des Mehrstoffbrenners 1 parallel zu dessen Längsachse angeordnet.

Der durch die Sauerstofflanze 8 geführte flüssige Sauerstoff wird aus einem Tank 9 über eine thermisch gut isolierte Zuleitung 10 für flüssigen Sauerstoff herangeführt. In der Zuleitung 10 ist beim Ausführungsbeispiel nach Fig. 1 ein indirekter Wärmetauscher 12 angeordnet, innerhalb dessen der flüssige Sauerstoff an einer Wärmetauscherfläche mit einem Kühlmedium in Kontakt gebracht wird, dessen Temperatur tiefer als die Siedetemperatur des flüssigen Sauerstoffs aus Tank 9 ist. Der flüssige Sauerstoff wird somit beim Wärmekontakt mit dem Kühlmedium unterkühlt. Beim Kühlmedium handelt es sich beispielsweise um flüssigen Stickstoff.

Fig. 1 zeigt den Mehrstoffbrenner 1 in seinem Einbauzustand in einem Drehrohrofen 13, beispielsweise einem Drehrohrofen zum Herstellen von Zement. Der Ofenraum 5 des nur ausschnittsweise dargestellten Drehrohrofens 13 umfasst eine drehbar gelagerte Trommel 14, an deren Stirnseite 15 der Mehrstoffbrenner 1 eingebaut ist. Beim Betrieb des Drehrohrofens 13 wird die Trommel 14 mit Aufgabegut 16 beschickt. Im Anschluss an die thermische Behandlung im Drehrohrofen 13 wird das Aufgabegut 16 über eine Ausgabeöffnung 17 abgeführt. Über den Ringkanal 3 des Mehrstoffbrenners 1 wird das primäre Oxidationsmittel und über den Ringkanal 4 der primäre Brennstoff in den Ofenraum 5 eingebracht und bildet dort, nach Zündung, eine Flamme 18 aus. Über hier nicht gezeigte Zuführungen außerhalb des Mehrstoffbrenners 1 wird ein weiteres Oxidationsmittel, die meist als "Sekundärluft" bezeichnet wird und beispielsweise bei der Klinkererzeugung den größten Teil des insgesamt eingesetzten Oxidationsmittels ausmacht, in den Ofenraum 5 eingetragen.

Gleichzeitig mit dem Eindüsen des primären Oxidationsmittels und des primären Brennstoffs wird über das Förderrohr 7 ein sekundärer Festbrennstoff, beispielsweise Kunststoff-Schreddermaterial, pneumatisch in den Ofenraum 5 eingetragen; gegebenenfalls werden über hier nicht gezeigte Zuführungen weitere sekundäre Brennstoffe eingetragen. In Fig. 1 ist eine typische Flugbahn 20 eines Partikels des Sekundärbrennstoffs dargestellt. Über die Sauerstofflanze 8 wird flüssiger, unterkühlter Sauerstoff in den Ofenraum 5 eingetragen, der innerhalb des Ofenraums 5 als Flüssigsauerstoffstrahl 21 vorliegt und weit in den Ofenraum eingetragen werden kann. Ausgehend von der Oberfläche des Flüssigsauerstoffstrahls 21 verdampft der Flüssigsauerstoff allmählich, durchmischt sich mit dem Strom des Sekundärbrennstoffs und sorgt für eine effiziente Verbrennung der Partikel des Sekundärbrennstoffs.

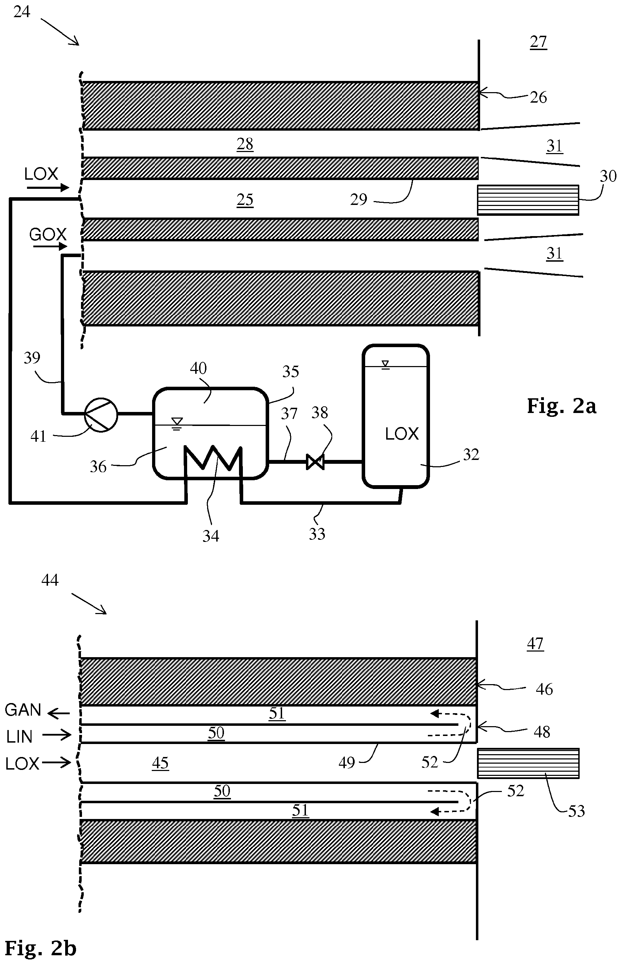

Die Fig. 2a und 2b zeigen Teilansichten verschiedener weiterer Ausgestaltungen eines erfindungsgemäßen Mehrstoffbrenners.

Der in Fig. 2a gezeigte Mehrstoffbrenner 24 umfasst eine Sauerstofflanze 25 für flüssigen Sauerstoff, die im Bereich eines Brennermundes 26 des Mehrstoffbrenners 24 in einen Ofenraum 27 austritt. Zuleitungen für primären Brennstoff, primäres Oxidationsmittel sowie für einen oder mehrere sekundäre Brennstoffe sind beim Mehrstoffbrenner 24 in gleicher Weise vorhanden wie beim Mehrstoffbrenner 1, jedoch hier aus Gründen der Übersichtlichkeit nicht dargestellt. Radial außenseitig zur Sauerstofflanze 25 befindet sich ein Ringkanal 28, der von der Sauerstofflanze 25 durch eine thermisch isolierende Wand 29 getrennt ist, und der gleichfalls am Brennermund 26 in den Ofenraum austritt.

Im Betrieb des Mehrstoffbrenners 24 wird durch die Sauerstofflanze 25 flüssiger Sauerstoff (LOX) geleitet, der in der unten näher beschriebenen Weise zuvor unterkühlt, also auf eine Temperatur unterhalb seines Siedepunkts gebracht wurde. Der flüssige Sauerstoff bildet im Ofenraum 27 einen Flüssigsauerstoffstrahl 30 aus. Durch den Ringkanal 28 wird zugleich gasförmiger Sauerstoff (GOX) in den Ofenraum 27 eingetragen und bildet dort, koaxial um den Flüssigsauerstoffstrahl 30, einen isolierenden und stabilisierenden Hüllstrom 31 aus.

Im Ausführungsbeispiel nach Fig. 2a entstammen gasförmiger Sauerstoff und flüssiger Sauerstoff der gleichen Quelle, nämlich einem Flüssigsauerstofftank 32. Der als sekundäres Oxidationsmittel bestimmte Flüssigsauerstoff wird dem Tank 32 entnommen und über eine Leitung 33 der Sauerstofflanze 25 zugeführt. Zur Unterkühlung durchläuft er einen Wärmetauscher in Gestalt einer Kühlschlange 34, die innerhalb eines thermisch gut isolierten Behälters 35 aufgenommen ist. Im Behälter 35 befindet sich ein Bad 36 aus flüssigem Sauerstoff, das über eine Leitung 37, in der eine Entspannungsarmatur 38 angeordnet ist, mit dem Flüssigsauerstoff in Tank 32 in Strömungsverbindung steht. Eine Absaugleitung 39 steht mit einer Gasphase 40 oberhalb des Bades 36 im Behälter 35 in Strömungsverbindung und mündet in den Ringkanal 28 ein. In der Absaugleitung 39 ist eine Vakuumpumpe 41 angeordnet.

Zum Unterkühlen wird der Behälter 35 mit flüssigem Stickstoff gefüllt und anschließend im Behälter 35 mittels der Vakuumpumpe 41 ein Unterdruck erzeugt. Dadurch sinkt die Temperatur des Bades 36 auf beispielsweise -200°C. Der über Leitung 33 bei einer Temperatur von beispielsweise -180°C herangeführte Flüssigsauerstoff wird beim thermischen Kontakt mit dem Bad 36 an der Kühlschlange 34 auf eine Temperatur unterhalb seiner Siedetemperatur, beispielsweise auf -190°C, gebracht und als unterkühlter Sauerstoff der Sauerstofflanze 25 zugeführt. Die von der Vakuumpumpe 41 aus dem Behälter 35 abgesaugte Gasphase 40 wird über Leitung 39 dem Ringkanal 28 zugeführt und zur Ausbildung des Hüllstroms 31 eingesetzt. Das Bad 36 wird durch flüssigen Sauerstoff aus Tank 32 über Leitung 33 ergänzt. Dabei sorgt das Entspannungsventil 38 dafür, dass der Druck des flüssigen Sauerstoffs im Bad 36 niedriger bleibt als der Druck im Tank 32. Anstelle eines Entspannungsventil kann die Strömungsverbindung auch mittels eines Sperrventils während der Erzeugung des niedrigen Drucks durch die Vakuumpumpe 41 vollständig gesperrt und bei Bedarf wieder geöffnet werden.

Bei dem im Ausführungsbeispiel nach Fig. 2a gezeigten Aufbau kann auch auf die Vakuumpumpe 41 verzichtet werden, sofern der Flüssigsauerstoff im Tank 32 bei einem hinreichend hohen Druck von beispielsweise 5 bei 10 bar vorliegt. Mit diesem Druck wird der als sekundäres Oxidationsmittel gedachte Flüssigsauerstoff der Kühlschlange 34 zugeführt, während ein Teil des Flüssigsauerstoffs aus Tank 32 an der Entspannungsarmatur 38 auf einen Druck von beispielsweise 1,5 bar entspannt und in den Behälter 35 gefüllt wird. Auch in diesem Fall liegt der Flüssigsauerstoff im Bad 36 bei einer deutlich niedrigeren Temperatur vor als der durch die Kühlschlange 34 geführte Flüssigsauerstoff. Der infolge des Wärmetauschs aus dem Bad 36 verdampfende Sauerstoff strömt über Leitung 39 in den Ringkanal 28 ein, ohne dass es dazu einer Förderung durch eine Pumpe bedarf.

Der in Fig. 2b gezeigte Mehrstoffbrenner 44 umfasst gleichfalls eine Sauerstofflanze 45 für flüssigen Sauerstoff, die im Bereich eines Brennermundes 46 des Mehrstoffbrenners 44 in einen Ofenraum 47 austritt. Zuleitungen für primären Brennstoff, primäres Oxidationsmittel sowie für einen oder mehrere sekundäre Brennstoffe sind beim Mehrstoffbrenner 24 in gleicher Weise vorhanden wie beim Mehrstoffbrenner 1, jedoch hier aus Gründen der Übersichtlichkeit nicht dargestellt. Die Sauerstofflanze 45 umgibt ein ringförmiger Kühlkanal 48, der von der Sauerstofflanze 45 durch eine gut leitende Wärmetauscherfläche 49 getrennt ist, die den wesentlichen Teil der Außenwand der Sauerstofflanze 45 umfasst. Der Kühlkanal 48 ist als doppelwandiger Kanal ausgebildet und besitzt zwei konzentrisch zueinander verlaufende Ringkanäle 50, 51, die im Bereich des Brennermundes 46 durch eine oder mehrere Strömungsöffnungen 52 miteinander strömungsverbunden sind.

Im Betrieb des Mehrstoffbrenners 44 wird durch die Sauerstofflanze 45 flüssiger Sauerstoff (LOX) geleitet. Der flüssige Sauerstoff bildet im Ofenraum 47 einen Flüssigsauerstoffstrahl 53 aus. Gleichzeitig wird ein Kühlmedium, beispielsweise flüssiger Stickstoff (LIN), durch den inneren Ringkanal 50 des Kühlkanals 48 geführt. Der flüssige Stickstoff im Ringkanal 50 besitzt eine tiefere Temperatur als der flüssige Sauerstoff in der Sauerstofflanze 45 und kühlt diesen auf eine Temperatur unterhalb seines Siedepunktes ab. Der beim Wärmekontakt an der Wärmetauscherfläche 49 mit dem flüssigen Sauerstoff erwärmte und dabei zumindest teilweise verdampfte Stickstoff wird als gasförmiger Stickstoff (GAN) über den Ringkanal 51 in Gegenstrom zum flüssigen Stickstoff im Ringkanal 50 zurückgeführt und einer anderweitigen Verwendung zugeführt.

Die in Fig. 2b gezeigte Ausführungsform mit einer im Mehrstoffbrenner 44 integrierten Wärmetauscherfläche 49 kann im Übrigen durch einen weiteren Wärmetauscher stromauf zur Sauerstofflanze 45, beispielsweise entsprechend dem Wärmetauscher 12 in Fig. 1, ergänzt werden. Anstelle von Flüssigstickstoff können auch andere Kühlmedien zum Einsatz kommen, beispielsweise flüssiger Sauerstoff, der zuvor auf einen niedrigen Druck von beispielsweise 100 bis 150 mbar gebracht wurde und daher bei einer Temperatur vorliegt, die unter der Siedetemperatur des in der Sauerstofflanze 45 geführten Sauerstoffs liegt. Auch beim Mehrstoffbrenner 44 kann (hier nicht gezeigt), ähnlich wie beim Mehrstoffbrenner 24, ein Ringkanal zur Einleitung von gasförmigem Sauerstoff zwecks Ausbildung eines Hüllstroms aus gasförmigem Sauerstoff um den Flüssigsauerstoffstrahl 53 vorgesehen sein.

### Bezugszeichenliste

- 1.: Mehrstoffbrenner
- 2.: Brennermund
- 3.: Ringkanal
- 4.: Ringkanal
- 5.: Ofenraum
- 6.: horizontale Mittelebene
- 7.: Förderrohr
- 8.: Sauerstofflanze (für flüssigen Sauerstoff)
- 9.: Tank (für flüssigen Sauerstoff)
- 10.: Zuleitung (für flüssigen Sauerstoff)
- 11.: -
- 12.: Wärmetauscher
- 13.: Drehrohrofen
- 14.: Trommel
- 15.: Stirnseite
- 16.: Aufgabegut
- 17.: Ausgabeöffnung
- 18.: Flamme
- 19.: -
- 20.: Flugbahn
- 21.: Flüssigsauerstoffstrahl
- 22.: -
- 23.: -
- 24.: Mehrstoffbrenner
- 25.: Sauerstofflanze
- 26.: Brennermund
- 27.: Ofenraum
- 28.: Ringkanal
- 29.: Wand
- 30.: Flüssigsauertoffstrahl
- 31.: Hüllstrom
- 32.: Flüssigsauerstofftank
- 33.: Leitung
- 34.: Kühlschlange
- 35.: Behälter
- 36.: Bad
- 37.: Leitung
- 38.: Entspannungsarmatur
- 39.: Absaugleitung
- 40.: Gasphase
- 41.: Vakuumpumpe
- 42.: -
- 43.: -
- 44.: Mehrstoffbrenner
- 45.: Sauerstofflanze
- 46.: Brennermund
- 47.: Ofenraum
- 48.: Kühlkanal
- 49.: Wärmetauscherfläche
- 50.: Ringkanal
- 51.: Ringkanal
- 52.: Strömungsöffnung
- 53.: Flüssigsauerstoffstrahl

## Patentansprüche

1. Verfahren zum Beheizen eines Ofenraums, bei dem mittels eines Mehrstoffbrenners (1, 24, 44) ein primärer Brennstoff und ein primäres Oxidationsmittel sowie wenigstens ein Sekundärbrennstoff und ein sekundäres Oxidationsmittel in einen Ofenraum (5, 27, 47) eingetragen werden,
**dadurch gekennzeichnet,**
**dass** als sekundäres Oxidationsmittel ein durch eine Sauerstofflanze (8, 25, 45) geführter flüssiger Sauerstoff zum Einsatz kommt, der vor seinem Eintrag mit einem Medium, dessen Temperatur niedriger als die Temperatur des flüssigen Sauerstoffs ist, in thermischen Kontakt gebracht, dadurch unterkühlt und als Flüssigkeitsstrahl (21, 30, 53) in den Ofenraum (5, 27, 47) eingetragen wird, wobei der Sauerstoff auf eine Temperatur unterkühlt wird, die so gewählt ist, dass der Sauerstoff während seines Transports durch die Sauerstofflanze (8, 25, 45) und zumindest teilweise während seines Fluges durch den Ofenraum (5, 27, 47) im flüssigen Zustand verbleibt.

2. Verfahren nach Anspruch 1, **dadurch gekennzeichnet, dass** die Unterkühlung des flüssigen Sauerstoffs vor seinem Eintrag in den Ofenraum (5, 27, 47) durch thermischen Kontakt des flüssigen Sauerstoffs mit einem tiefkalt verflüssigtem Gas, beispielsweise flüssigem Stickstoff erfolgt.

3. Verfahren nach Anspruch 1 oder 2, **dadurch gekennzeichnet, dass** die Unterkühlung des flüssigen Sauerstoffs vor seinem Eintrag in den Ofenraum (5, 27, 47) durch thermischen Kontakt des flüssigen Sauerstoffs mit flüssigem oder gasförmigem Sauerstoff erfolgt, dessen Druck während des thermischen Kontakts niedriger als der Druck des als sekundäres Oxidationsmittel vorgesehene flüssige Sauerstoff gehalten wird.

4. Verfahren nach einem der vorhergehenden Ansprüche, **dadurch gekennzeichnet, dass** der flüssige Sauerstoff als ein mit einem Hüllstrom (31) aus gasförmigem Sauerstoff umgebener Flüssigkeitsstrahl (21, 30, 53) in den Ofenraum (5, 27, 47) eingetragen wird

5. Vorrichtung zur Durchführung des Verfahrens nach einem der vorhergehenden Ansprüche, mit einem Mehrstoffbrenner (1, 24, 44) der mit einer Zuführung (4) für einen primären Brennstoff und einer Zuführung für ein primäres Oxidationsmittel (3) sowie wenigstens einem Förderrohr (7) für einen Sekundärbrennstoff, die an einem Brennermund (2, 26, 46) in einen Ofenraum (5, 27, 47) ausmünden, ausgerüstet ist, und mit einer an eine Zuleitung (10, 33) für flüssigen Sauerstoff angeschlossene Sauerstofflanze (8, 25, 45) für die Einleitung von flüssigem Sauerstoff in den Ofenraum (2, 27, 47),
**dadurch gekennzeichnet,**
**dass** in der Zuleitung (10, 33) für flüssigen Sauerstoff und/oder in der Sauerstofflanze (8, 25, 45) ein Wärmetauscher (12, 34, 49) zum Unterkühlen des flüssigen Sauerstoffs angeordnet ist, der mit einer Quelle (9, 32) für ein eine niedrigere Temperatur als der flüssige Sauerstoff in der Zuleitung (10, 33) aufweisendes Kühlmedium strömungsverbunden ist.

6. Vorrichtung nach Anspruch 5, dass der Wärmetauscher (49) zum Unterkühlen des flüssigen Sauerstoffs einen die Sauerstofflanze (45) umgebenden Kühlkanal (48) umfasst.

7. Vorrichtung nach Anspruch 6, **dadurch gekennzeichnet, dass** der Kühlkanal (88) doppelwandig ausgeführt und in einen inneren Ringkanal (50) und einen äußeren Ringkanal (51) unterteilt ist, wobei der innere Ringkanal (50) mit dem äußeren Ringkanal (51) im Bereich des Brennermundes (46) miteinander strömungsverbunden sind.

8. Vorrichtung nach einem der Ansprüche 5 bis 7, **dadurch gekennzeichnet, dass** radial außenseitig an der Sauerstofflanze (8, 25, 45) und/oder dem Kühlkanal (48) eine als Ringkanal (28) ausgebildete Zuführung für gasförmigen Sauerstoff vorgesehen ist.

9. Vorrichtung nach einem der Ansprüche 5 bis 8, **dadurch gekennzeichnet, dass** die Zuleitung (10, 33) für flüssigen Sauerstoff eine in einem Unterkühlergefäß (35) angeordnete Wärmetauscherfläche (34) umfasst, welches Unterkühlergefäß (35) mit einer Quelle (33) für flüssigen Sauerstoff strömungsverbindbar ist und mit einer Vakuumpumpe (41) zur Herstellung eines Unterdrucks im Unterkühlergefäß (35) ausgerüstet ist.

## Claims

1. Method for heating a kiln chamber in which, using a multi-fuel burner (1, 24, 44), a primary fuel and a primary oxidant as well as at least one secondary fuel and a secondary oxidant are introduced into a kiln chamber (5, 27, 47),
**characterized in that**
as secondary oxidant, use is made of liquid oxygen which is introduced using an oxygen lance (8, 25, 45) and which, before being introduced, is brought into thermal contact with a medium whose temperature is below the temperature of the liquid oxygen and is thereby subcooled and introduced into the kiln chamber (5, 27, 47) as a liquid jet (21, 30, 53), wherein the oxygen is subcooled to a temperature that is chosen such that the oxygen remains in the liquid state as it is transported through the oxygen lance (8, 25, 45) and at least partially during its flight through the kiln chamber (5, 27, 47).

2. Method according to Claim 1, **characterized in that** subcooling of the liquid oxygen prior to its introduction into the kiln chamber (5, 27, 47) is performed by thermal contact between the liquid oxygen and a cryogenically liquefied gas, for example liquid nitrogen.

3. Method according to Claim 1 or 2, **characterized in that** subcooling of the liquid oxygen prior to its introduction into the kiln chamber (5, 27, 47) is performed by thermal contact between the liquid oxygen and liquid or gaseous oxygen whose pressure, during the thermal contact, is kept below the pressure of the liquid oxygen intended as the secondary oxidant.

4. Method according to one of the preceding claims, **characterized in that** the liquid oxygen is introduced into the kiln chamber (5, 27, 47) as a liquid jet (21, 30, 53) surrounded by an enclosing flow (31) of gaseous oxygen.

5. Device for carrying out the method according to one of the preceding claims, having a multi-fuel burner (1, 24, 44) which is equipped with a supply (4) for a primary fuel and a supply for a primary oxidant (3) as well as at least one feed pipe (7) for a secondary fuel, which open into a kiln chamber (5, 27, 47) at a burner mouth (2, 26, 46), and having an oxygen lance (8, 25, 45), connected to a supply line (10, 33) for liquid oxygen, for introducing liquid oxygen into the kiln chamber (2, 27, 47), **characterized in that**
a heat exchanger (12, 34, 49) for subcooling the liquid oxygen is arranged in the supply line (10, 33) for liquid oxygen and/or in the oxygen lance (8, 25, 45), which heat exchanger is fluidically connected to a source (9, 32) for a coolant having a lower temperature than the liquid oxygen in the supply line (10, 33).

6. Device according to Claim 5, that the heat exchanger (49) for subcooling the liquid oxygen comprises a cooling channel (48) surrounding the oxygen lance (45).

7. Device according to Claim 6, **characterized in that** the cooling channel (88) is of twin-wall design and is divided into an inner annular channel (50) and an outer annular channel (51), wherein the inner annular channel (50) and the outer annular channel (51) are fluidically connected to one another in the region of the burner mouth (46).

8. Device according to one of Claims 5 to 7, **characterized in that** a supply for gaseous oxygen, designed as an annular channel (28), is provided radially outwardly on the oxygen lance (8, 25, 45) and/or the cooling channel (48).

9. Device according to one of Claims 5 to 8, **characterized in that** the supply line (10, 33) for liquid oxygen includes a heat exchanger surface (34) arranged in a subcooler vessel (35), which subcooler vessel (35) can be fluidically connected to a source (33) of liquid oxygen and is equipped with a vacuum pump (41) to establish a reduced pressure in the subcooler vessel (35).

## Revendications

1. Procédé destiné au chauffage d'une chambre d'un four, pour lequel un combustible primaire et un agent oxydant primaire, ainsi que tout au moins un combustible secondaire et un agent oxydant secondaire sont introduits dans une chambre de four (5, 27, 47),
au moyen d'un brûleur à multicombustibles (1, 24, 44), **caractérisé en ce que**
un oxygène liquide, dirigé par l'intermédiaire d'une lance à oxygène (8, 25, 45), est mis en oeuvre sous la forme d'un agent oxydant secondaire, lequel est mis en contact thermique avant son introduction avec un milieu, dont la température est inférieure à la température de l'oxygène liquide, l'oxygène liquide se trouve de ce fait sous-refroidi et est introduit dans la chambre du four (5, 27, 47) sous la forme d'un jet de liquide (21, 30, 53) ;
selon lequel l'oxygène est sous-refroidi à une température qui est sélectionnée de telle sorte que l'oxygène demeure à l'état liquide pendant son transport, par l'intermédiaire de la lance à oxygène (8, 25, 45), et demeure également à l'état liquide, tout au moins en partie, pendant sa projection à travers la chambre du four (5, 27, 47).

2. Procédé selon la revendication 1, **caractérisé en ce que** le sous-refroidissement de l'oxygène liquide a lieu avant son introduction dans la chambre du four (5, 27, 47), par l'intermédiaire du contact thermique de l'oxygène liquide avec un gaz liquéfié à très basse température, par exemple de l'azote liquide.

3. Procédé selon la revendication 1 ou 2, **caractérisé en ce que** le sous-refroidissement de l'oxygène liquide a lieu avant son introduction dans la chambre du four (5, 27, 47), par l'intermédiaire du contact thermique de l'oxygène liquide avec de l'oxygène sous forme liquide ou gazeuse, dont la pression pendant le contact thermique est maintenue à un niveau inférieur à la pression de l'oxygène liquide prévue comme agent oxydant secondaire.

4. Procédé selon l'une des revendications précédentes, **caractérisé en ce que** l'oxygène liquide est introduit dans la chambre du four (5, 27, 47) sous la forme d'un jet de liquide (21, 30, 53) qui est entouré d'un flux enveloppant (31) constitué d'oxygène sous forme gazeuse.

5. Dispositif destiné à la réalisation du procédé selon l'une des revendications précédentes, avec un brûleur à multicombustibles (1, 24, 44), lequel est équipé d'une admission (4) pour un combustible primaire et d'une admission pour un agent oxydant (3) primaire, ainsi que de tout au moins un tube de transport (7) pour un combustible secondaire, lesquels débouchent dans une chambre de four (5, 27, 47), au niveau d'une tuyère (2, 26, 46), et avec une lance à oxygène (8, 25, 45), laquelle est raccordée à une conduite d'alimentation (10, 33) pour l'oxygène liquide et laquelle est destinée à l'introduction de l'oxygène liquide dans la chambre du four (2, 27, 47),
**caractérisé en ce que**
un échangeur de chaleur (12, 34, 49) destiné au sous-refroidissement de l'oxygène liquide est disposé dans la conduite d'alimentation (10, 33) pour l'oxygène liquide et/ou dans la lance à oxygène (8, 25, 45), lequel échangeur de chaleur est relié en communication de fluide avec une source (9, 32) pour un agent réfrigérant, lequel présente une température inférieure à l'oxygène liquide dans la conduite d'alimentation (10, 33).

6. Dispositif selon la revendication 5, que l'échangeur de chaleur (49) destiné au sous-refroidissement de l'oxygène liquide comprend un canal de refroidissement (48) qui entoure la lance à oxygène (45).

7. Dispositif selon la revendication 6, **caractérisé en ce que** le canal de refroidissement (88) est réalisé avec une double paroi et est divisé en un canal annulaire intérieur (50) et un canal annulaire extérieur (51), selon lequel le canal annulaire intérieur (50) et le canal annulaire extérieur (51) sont reliés l'un à l'autre en communication de fluide dans la zone de la tuyère (46).

8. Dispositif selon l'une des revendications 5 à 7, **caractérisé en ce qu'**une admission, conçue sous la forme d'un canal annulaire (28) est prévue pour l'oxygène sous forme gazeuse, laquelle est située de manière radiale sur le côté externe de la lance à oxygène (8, 25, 45) et/ou au niveau du canal de refroidissement (48).

9. Dispositif selon l'une des revendications 5 à 8, **caractérisé en ce que** la conduite d'alimentation (10, 33) pour l'oxygène liquide comprend une surface (34) d'échangeur de chaleur disposée dans un réservoir de sous-refroidisseur (35), lequel réservoir de sous-refroidisseur (35) peut être relié en communication de fluide avec une source (33) pour l'oxygène liquide et lequel est équipé d'une pompe à vide (41) en vue de la production d'une dépression dans le réservoir de sous-refroidisseur (35).
